# EUROPEAN PATENT APPLICATION

(11) **EP 2 302 317 A1**
(43) Date of publication of application: **30.03.2011**
(21) Application number: 08783928.8
(22) Date of filing: 08.08.2008
(51) Int. Cl.: G01B 7/02, G01B 21/02, G01D 5/249

(54) **AN ELECTRONIC COORDINATOMETER FOR POSITION DETECTION**

(30) Priority: 11.07.2008 CN 200810048392
(71) Applicant: Wuhan Leaddo Measuring&Control Co., Ltd, Wuhan, Hubei 430070 (CN)
(72) Inventor: ZHANG, Minghua, Hubei 430070 (CN); HUANG, Qinxue, Hubei 430070 (CN); LI, Bo, Hubei 430070 (CN); YAN, Jinyong, Hubei 430070 (CN); WANG, Chunzheng, Hubei 430070 (CN)
(74) Representative: Zeuner & Summerer
(86) International application number: PCT/CN2008/071935
(87) International publication number: WO 2010/003290

(57) **Abstract**

An electronic coordinatometer for position detection is made up of position detecting bus formed by connecting multiple measuring scales with the same length by multiple connecting plates, each measuring scale has a scale cover (3), a scale bottom (1), a line frame (2) and an end frame (7), the line frame (2) is fixed at the scale bottom (1), several sets of wires are wound around the line frame (2) in Gray code, each measuring scale is sealed by the scale cover (3) and the scale bottom (1), the end frame (7) is fixed at two ends of the scale bottom (1), the wires in the measuring scale are drawn out from the end frame (7) to a connecting terminal (8) which is connected with the connecting plates, each connecting plate has a connecting cover (11) a connecting base (10) and a circuit board (9), the circuit board (9) is weld to the connecting base (10), a connecting seat (12) on the connecting base (10) is connected with both the printed conductor on the circuit board (9) and the connecting terminal (8), each connecting plate is sealed by the connecting cover (11) and the connecting base (10).

## Description

### FIELD OF THE INVENTION

The present invention relates to a position detecting device, and more particularly to an electronic coordinatometer for detecting the position of port hoisting machinery and large mobile locomotive in metallurgical industry.

### BACKGROUND OF THE INVENTION

In the process of industrial production, the location between the large mobile locomotive and the ground is very important. In the early 1980s, induction radio technology is widely used on the automation of the large mobile locomotive in the industrial production for location. In recent years, the combination of the technology and the computer technology has made the level of locomotive automation develop toward systematized, networking and unmanned.

Induction radio technology is also called induction bus technology in Chinese. The induction radio technology developed in the early 1980s.The technology developed for the automation of the large mobile locomotive in the industrial production, and which has high reliability and high anti-interference ability, especially possesses the feature that the technology can be used in long-distance continuously and achieve precise address detection under centimeter-level accuracy. The technology has developed rapidly both at home and abroad in the 1980s and 1990s.

In the method of position detection which based on induction radio technology, a bus is an important carrier in position detecting. The traditional bus is a whole bus which is custom-made according to a length in fieldwork, such as the method described in the published Chinese Patent 200610076308.X, in which the method causes discontinuous and inhomogeneous production. Meanwhile, the bus needs to be transported by winding into a plate, which is too heavy. Furthermore, hoisting equipment is needed in site erection.

### SUMMARY OF THE INVENTION

One objective of the invention is to provide an electronic coordinatometer for position detection which is formed by multiple rules having the same length and connected via connecting plates to overcome drawbacks of the prior art, rather than custom-make a whole bus according to the length in fieldwork.

To achieve the above objectives, the invention is formed by multiple position detecting buses, wherein the bus is formed by multiple scales having the same length and connected via the connecting plates.

In a class of this embodiment, each scale is consist of a scale cover, a scale bottom, a line frame and an end frame, wherein the line frame for winding wires is disposed on the scale bottom, and each scale is sealed by the scale cover and the scale bottom. The end frame is fixed on the both ends of the scale bottom, and a connecting terminal is led out from the end frame to connect the bus in the scale and the connecting plate.

In a class of this embodiment, the connecting plate is consist of a connecting cover, a connecting base and a circuit board, wherein the circuit board is weld to the connecting base, a connecting seat is disposed in the connecting base for connecting a printed conductor on the circuit board to the connecting terminal of the end frame, and each connecting plate is sealed by the connecting cover and the connecting base.

In a class of this embodiment, the line frame comprises at least a rectangular frame, a slot is disposed on each side of the rectangular frame, and a wrapping post is disposed in the vicinity of each endpoint of the rectangular frame.

In a class of this embodiment, at least two line frames are disposed in each scale, adjacent line frames are fixed by a first line card.

In a class of this embodiment, a second line card is disposed between the line frame and the wrapping post.

Because the invention is formed by multiple rules connected via the connecting plates and the scales have the same length, it's no need to custom-make a whole bus according to the length in fieldwork, but connecting multiple scales having the same length to the length in fieldwork via the connecting plates. The invention is notaffected by environment noise or fluctuation of signal level, and is capable of stably operating in hostile environment. The production, transportation and installation of the invention are convenient, and the invention overcomes not only the drawbacks of the discontinuous and inhomogeneous production in producing the bus and transportation by winding into plates, but also the drawbacks that hoisting equipment is required when mounting in the fieldwork.

### BRIEF DESCRIPTION OF THE DRAWINGS

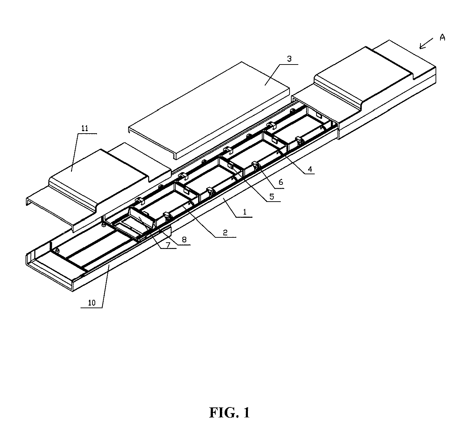

FIG. **1** is a schematic view of the invention;

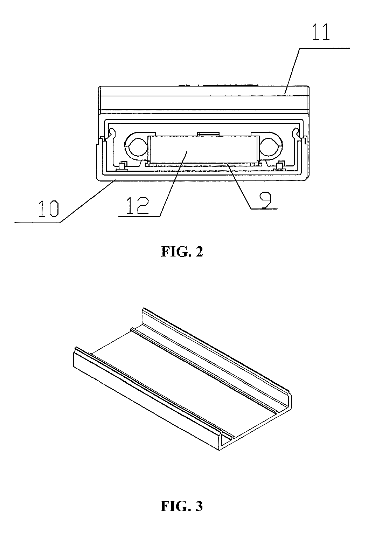

FIG. **2** is a schematic view of FIG. 1 in the A direction;
FIG. **3** is a schematic view of the scale bottom

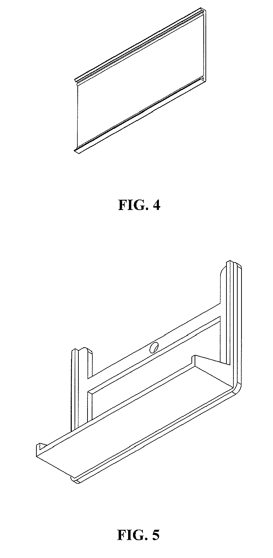

FIG. **4** is a schematic view of the scale cover;
FIG. **5** is a schematic view of an end frame of a scale;

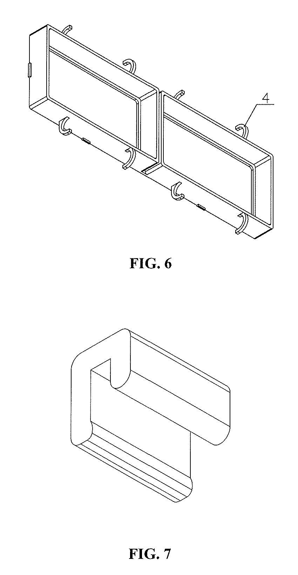

FIG. **6** is a schematic view of a line frame of a scale;
FIG. **7** is a schematic view of a first line card; and

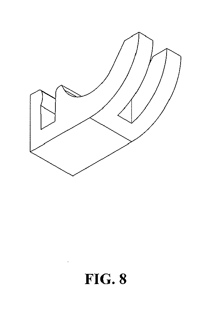

FIG. **8** is a schematic view of a second line card.
   In which:
   **1** - scale bottom **2** - line frame **3** - scale cover **4** - wrapping post **5** - first line card **6** - second line card **7** - end frame **8** - connecting terminal **9** - circuit board **10** - connecting base **11** - connecting cover **12** - connecting seat

### DETAILED DESCRIPTION OF THE EMBODIMENTS

The invention will now be described in detailed with reference to the figures and the embodiments, but the invention is not to be limited to the disclosed embodiments.

The invention is consist of a scale and a connecting plate. The scale comprises a scale cover, a scale bottom, a line frame, an end frame and a line card and the connecting plate comprises a connecting cover, a connecting base and a circuit board. The length of the scale is 6.28 m and the length of the connecting plate is 0.12 m. Every two scales are connected to a piece via the connecting plate in physics and electricity

A length of the line frame 2 is 200 mm and a length of the end frame 7 is 40 mm. 31 line frames and two end frames are disposed on each scale bottom. The line frame is fixed on the scale bottom and the end frame is fixed on the both end of the scale. Wires are disposed along the line frame on the bottom of the scale. The line cards operate to fix the wires on the line frame after winding the wires to prevent the wires from moving. The both ends of the scale are led out by a connecting terminal. The circuit board is fixed on the line frame. And a connecting seat is weld on the circuit board and connects to the connecting terminal which is led out from the scale, so as to achieve wire butt joints among the scales. The scale and the connecting plate are sealed via rubber rings whereby preventing water from entering therein.

In the scale, wires are wrapped on the line frame in a form of Gray codes whereby indicating absolute position information (the method is the same with that in published Chinese Patent 200610076308.X). In operation, an antenna is moved in parallel to the electronic coordinatometer, and a distance therebetween is 30 - 300 mm. Because the invention is based on a principle of contactless electromagnetic induction, it's adapted to operating in hostile environment both inside and outside. The position detecting method of the invention is that the antenna inducts and locates the induction scale mounted within the measuring range in the contactless way.

The content not described in detailed in the specification is well known to persons ordinarily skilled in the art.

## Claims

1. An electronic coordinatometer for position detection , comprising multiple position detecting buses; wherein said bus is formed by multiple scale connected via said connecting plates; and said scale have the same length.

2. The electronic coordinatometer for position detection of claim 1, wherein said scale comprises a scale cover, a scale bottom, a line frame, and an end frame, wherein the line frame for winding wires is disposed on the scale bottom, and each scale is sealed by the scale cover and the scale bottom. The end frame is fixed on the both ends of the scale bottom, and a connecting terminal is led out from the end frame to connect the bus in the scale and the connecting plate.

3. The electronic coordinatometer for position detection of claim 1, wherein said connecting plate is consist of a connecting cover, a connecting base and a circuit board, wherein the circuit board is weld to the connecting base, a connecting seat is disposed in the connecting base for connecting a printed conductor on the circuit board to the connecting terminal of the end frame, and each connecting plate is sealed by the connecting cover and the connecting base.

4. The electronic coordinatometer for position detection of claim 2, wherein said line frame comprises at least a rectangular frame, a slot is disposed on each side of the rectangular frame, a wrapping post is disposed in the vicinity of each endpoint of the rectangular frame.

5. The electronic coordinatometer for position detection of claim 2 or claim 4, wherein at least two line frames are disposed in each scale, adjacent line frames are fixed by a first line card.

6. The electronic coordinatometer for position detection of claim 4, wherein a second line card is disposed between the line frame and the wrapping post.

7. The electronic coordinatometer for position detection of claim 1, wherein a length of said scale is 6.28 m, and a length of said connecting board is 0.12 m.

8. The electronic coordinatometer for position detection of claim 1, wherein a length of the scale is 6.28 m, a length of the connecting plate is 0.12 m, a length of the line frame is 200 mm, a length of the end frame is 40 mm, 31 line frames are disposed at the bottom of each scale.
